# EUROPEAN PATENT APPLICATION

(11) **EP 2 650 336 A1**
(43) Date of publication of application: **16.10.2013**
(21) Application number: 11846694.5
(22) Date of filing: 08.12.2011
(51) Int. Cl.: C09D 1/02, C09D 5/02, C09D 7/12, C09D 133/00, C09D 167/00, C09D 183/00

(54) **METHOD OF PRODUCING A WATER GLASS COATING COMPOSITION**

(30) Priority: 08.12.2010 JP 2010274046
(71) Applicant: Kabushiki Kaisha Atotis, Shibuya-ku, Tokyo 151-0065 (JP)
(72) Inventor: ITAGAKI, Teruhiko, Nagoya-shi Aichi 460-0002 (JP); IMAOKA, Kenichi, Nagoya-shi Aichi 464-0067 (JP)
(74) Representative: Potter Clarkson LLP
(86) International application number: PCT/JP2011/006870
(87) International publication number: WO 2012/077344

(57) **Abstract**

A coating composition which can retain carbon dioxide absorption capacity for a dramatically longer time period than conventional coating compositions is produced. The production method includes a step of stirring and mixing a silicate compound and alkaline ionized water containing clusters of water molecules that have been finely broken down, together with at least any one of a far-infrared radiation emitting ceramic and a far-infrared radiation emitting mineral.

## Description

### Technical Field

The present invention relates to a method for producing a water glass coating composition. More particularly, the present invention relates to a method for producing a water glass coating composition which absorbs carbon dioxide and forms polysilicic acid.

### Background Art

Patent Literatures 1 and 2 disclose water glass coating compositions produced by kneading water, a silicate compound and an acrylic resin-based binder material. A water glass coating composition applied on an object to be coated absorbs carbon dioxide in the atmosphere and forms polysilicic acid in the course of curing. Thereby, the object to be coated is imparted with weather resistance. That is, it can be said that a water glass coating composition is an excellent coating composition which imparts weather resistance to an object to be coated and also reduces the greenhouse effect which is a cause of global warming.

### Citation List

### Patent Literature

Patent Literature 1: Japanese Utility Model Registration No. 3162178
Patent Literature 2: Japanese Utility Model Registration No. 3160385

### Summary of Invention

### Technical Problem

However, a coating film formed by applying a water glass coating composition on an object to be coated has a problem that the coating film is likely to undergo deterioration due to oxidation as a result of the loss of carbon dioxide absorption capacity, and retention of weather resistance becomes difficult. Thus, a water glass coating composition which can maintain carbon dioxide absorption capacity for a longer time period is desired so as to retain weather resistance over a longer time period.

An object of the present invention is to provide a method for producing a water glass coating composition which can maintain carbon dioxide absorption capacity for a dramatically longer time period than conventional water glass coating compositions, and can retain weather resistance over a long time.

Another object of the present invention is to provide a water glass coating composition which can maintain carbon dioxide absorption capacity for a dramatically longer time than conventional water glass coating compositions, and can retain weather resistance over a long time.

### Solution to Problem

In order to address such problems, the method for producing a water glass coating composition of the present invention includes a step of stirring and mixing a silicate compound and alkaline ionized water containing clusters of water molecules that have been finely broken down, together with at least one of a far-infrared radiation emitting ceramic and a far-infrared radiation emitting mineral.

Furthermore, the water glass coating composition according to a first embodiment of the present invention is a composition obtainable by the method for producing a water glass coating composition of the present invention, in which the silicate compound is lithium silicate and potassium silicate, and the water glass coating composition contains 7.6 to 11.4 parts by weight of alkaline ionized water, 1.5 to 2.3 parts by weight of lithium silicate, 0.8 to 1.2 parts by weight of potassium silicate as an aqueous solution at a concentration of 20 wt% to 50 wt%, 0.12 to 0.20 parts by weight of methanol, and 2.7 to 4.2 parts by weight of an aqueous silicone solution at a concentration of 20 wt% to 50 wt%, and is capable of maintaining carbon dioxide absorption capacity for at least 2,520 hours at a carbon dioxide concentration of 4,000 ppm.

Furthermore, the water glass coating composition according to a second embodiment of the present invention is a composition obtainable by a method for producing a water glass coating composition of the present invention, in which the silicate compound is lithium silicate, and the water glass coating composition contains 1.3 to 2.1 parts by weight of alkaline ionized water, 2.4 to 3.6 parts by weight of colloidal silica, 0.17 to 0.27 parts by weight of lithium silicate, 4.8 to 7.2 parts by weight of a polyester neutralization product, 3.7 to 5.7 parts by weight of an aqueous emulsion of an acrylic acid ester copolymer, and 0.30 to 0.46 parts by weight of a silicone emulsion, and is capable of maintaining carbon dioxide absorption capacity for at least 2, 520 hours at a carbon dioxide concentration of 4,000 ppm.

Furthermore, the water glass coating composition according to a third embodiment of the present invention is a composition obtainable by the method for producing a water glass coating composition of the present invention, in which the silicate compound is lithium silicate and potassium silicate, and the water glass coating composition contains 1.1 to 1.7 parts by weight of alkaline ionized water, 1.9 to 2.9 parts by weight of lithium silicate, 0.4 to 0.6 parts by weight of potassium silicate as an aqueous solution at a concentration of 20 wt% to 50 wt%, 1.4 to 2.2 parts by weight of a pigment, 0.04 to 0.06 parts by weight of a pigment dispersant, 0.7 to 1.1 parts by weight of calcium carbonate, 4.1 to 6.3 parts by weight of a polyester neutralization product, and 3.0 to 4.6 parts by weight of an acrylic emulsion, and is capable of maintaining carbon dioxide absorption capacity for at least 2,520 hours at a carbon dioxide concentration of 4,000 ppm.

Furthermore, the water glass coating composition according to a fourth embodiment of the present invention is a composition obtainable by the method for producing a water glass coating composition of the present invention, in which the silicate compound is lithium silicate and potassium silicate, and the water glass coating composition contains 1.1 to 1.7 parts by weight of an alkaline ionized water, 1.9 to 2.9 parts by weight of lithium silicate, 0.4 to 0.6 parts by weight of potassium silicate as an aqueous solution at a concentration of 20 wt% to 50 wt%, 0.7 to 1.1 parts by weight of calcium carbonate, 4.1 to 6.3 parts by weight of a polyester neutralization product, 3.0 to 4.6 parts by weight of an acrylic emulsion, 1.4 to 2.3 parts by weight of crystal powder and shirasu (the mixing ratio (by weight) of crystal powder and shirasu is 5 to 9 : 5 to 1), and is capable of maintaining carbon dioxide absorption capacity for at least 2, 520 hours at a carbon dioxide concentration of 4,000 ppm.

### Advantageous Effects of Invention

According to the present invention, since a step of stirring and mixing a silicate compound and alkaline ionized water containing clusters of water molecules that have been finely broken down, together with at least any one of a far-infrared radiation emitting ceramic and a far-infrared radiation emitting mineral, is included, a water glass coating composition which can maintain the carbon dioxide absorption capacity for a dramatically longer time period than conventional water glass coating compositions and can retain weather resistance for a long time period, can be obtained.

### Brief Description of Drawings

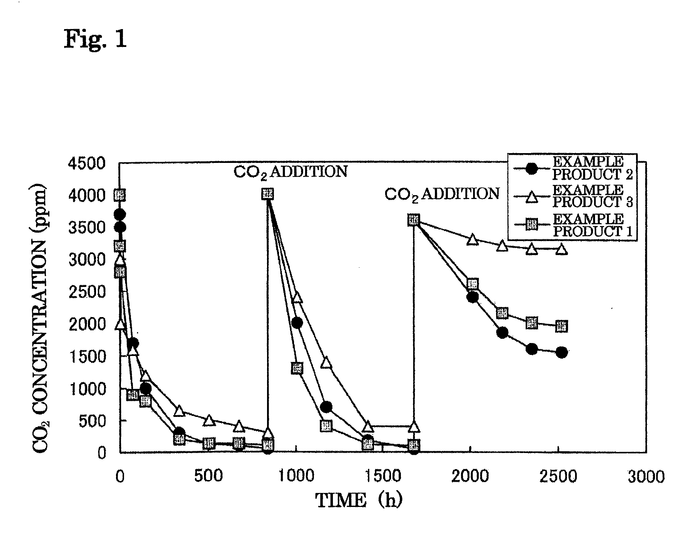

FIG. 1 is a diagram illustrating the results of a carbon dioxide absorption test for a water glass coating composition obtained by the production method of the present invention.

### Description of Embodiments

Hereinafter, embodiments for carrying out the present invention will be described in detail with reference to the drawings.

The method for producing a water glass coating composition of the present invention includes a step of stirring and mixing a silicate compound and alkaline ionized water containing clusters of water molecules that have been finely broken down, together with at least any one of a far-infrared radiation emitting ceramic and a far-infrared radiation emitting mineral.

The water glass coating composition is produced by mixing water and a silicate compound, and as necessary, incorporating one or more additives such as a adhesive, a pigment, a neutralizing agent, and a binding agent. In the present invention, a step of stirring and mixing a silicate compound and alkaline ionized water containing clusters of water molecules that have been finely broken down, together with at least any one of a far-infrared radiation emitting ceramic and a far-infrared radiation emitting mineral, is included. The various additives are added as necessary before and after this step, or during this step, and the resulting mixture stirred and mixed. Hereinafter, various components that are incorporated will be described in detail.

### <Water>

In the present invention, water produced by finely breaking down clusters of water molecules in alkaline ionized water is used. Alkaline ionized water produced from water containing clusters of water molecules that have been finely broken down can also be used, but from the viewpoint of maintaining finely broken clusters of water molecules, it is suitable to use water produced by finely breaking down clusters of water molecules in alkaline ionized water.

Alkaline ionized water is produced by electrolyzing water such as naturally occurring water, tap water or distilled water. Here, for the apparatus that produces alkaline ionized water, various kinds are known, and an example thereof may be an alkaline ionized water filter (JAW-010 type) manufactured by Nippon Intek Holdings Co., Ltd.; however, the apparatus is not intended to be limited to this as long as it is an apparatus which can produce alkaline ionized water. In addition, commercially available products of alkaline ionized water may also be used.

Here, in the case of using tap water or the like that contains a large amount of impurities such as chlorine, as the water for producing alkaline ionized water, it is suitable to remove the impurities such as chlorine by filtration or the like after alkaline ionized water is produced, or after the treatment of finely breaking down clusters of water molecules is applied. However, since the effect of impurities such as chlorine on the effect of long-term retention of the carbon dioxide absorption capacity of the water glass coating composition is small, the process of removing impurities such as chlorine is not an essential step in the production method of the present invention.

The pH of the alkaline ionized water is preferably set to higher than pH 7.3 and lower than pH 8.7, more preferably set to pH 7.5 to pH 8.5, and even more preferably set to pH 7.5 to pH 8.0. When alkaline ionized water at pH 7.3 or lower or alkaline ionized water at pH 8.7 or higher is used, the coating film formed by the coating composition thus produced is likely to have cracks. Furthermore, the coating composition itself is cloudy, and a transparent product may not be obtained.

Examples of the method for carrying out a treatment of finely breaking down clusters of water molecules include, but are not limited to, a method of using an ultrasonic treatment (see Japanese Examined Patent Application Publication No. 07-41241), a method based on high frequency wave application, and a method based on the contact with a far-infrared radiation emitting ceramic or a far-infrared radiation emitting mineral.

Examples of the far-infrared radiation emitting ceramic and the far-infrared radiation emitting mineral used in the method for finely breaking down clusters of water molecules include silicon carbide, zirconia, zircon, alumina, maifan stone, tourmaline minerals, bioceramics, kiyoseki, illite, biotite, germanium, and monazite, and these can be used singly or in combination of two or more kinds. However, the ceramic and the mineral are not intended to be limited to these, as long as they are materials having an action of finely breaking down clusters of water molecules by emission of far-infrared radiation.

Here, Japanese Examined Patent Application Publication No. 07-108396 suggests a method of finely breaking down clusters of water molecules by utilizing far-infrared radiation emitting ceramics. Specifically, by providing a far-infrared radiation emitting ceramic that moves around in a water channel as a water purifying means provided in the water channel having a feed water inlet and a water outlet, and also by forming the water channel into a ring-shaped groove so that the far-infrared radiation emitting ceramic is caused to flow along this groove and to circulate by the water stream generated in this groove, the frequency of contact between water and the far-infrared radiation emitting ceramic is increased, and thereby clusters of water molecules are finely broken down. As such, fine division of clusters of water molecules can be accelerated by increasing the frequency of contact between water and the far-infrared radiation emitting ceramic.

Furthermore, there are several commercially available apparatuses that perform the treatment of finely breaking down clusters of water molecules. An example thereof is Cosmo Balance M122 of Water System Co., Ltd. This apparatus has a function of removing impurities such as chlorine, together with a function of performing the treatment of finely breaking down clusters of water molecules, and therefore, the apparatus is suitable to be used for the production method of the present invention. However, the apparatus that performs a treatment of finely breaking down clusters of water molecules is not intended to be limited to this.

### <Silicate compound>

As the silicate compound, an alkali silicate, colloidal silica or the like can be used, but it is suitable to use alkali silicate alone, or to use an alkali silicate in combination with colloidal silica. It is more suitable to use lithium silicate and potassium silicate in combination, or to use lithium silicate and colloidal silica in combination.

An alkali silicate is a silicate compound represented by the formula: M₂O·nSiO₂. M represents an alkali metal element. n is greater than 0 (n > 0), and n may not be an integer. The value of n is such that generally, when M is sodium (Na), n = 2 to 4. When M is potassium (K), n = 2 to 3. 8. When M is lithium (Li), n = 3 to 8. However, as long as an alkali silicate can be established, the value of n is not intended to be limited to these values.

As the alkali silicate, commercially available products may be used, or synthetic products that have been synthesized may also be used. For example, in the production method of the present invention, starting raw materials from which an alkali silicate can be synthesized are stirred and mixed together with an alkaline ionized water containing clusters of water molecules that have been finely broken down, and an alkali silicate may be synthesized during the operation. Such an embodiment of producing a water glass coating composition is also included in the scope of the present invention.

Colloidal silica is a colloidal solution of silica. Examples thereof include Silicadol (registered trademark) 20, Silicadol 30, Silicadol 40, Silicadol 20AL, Silicadol 20G, Silicadol 30G, Silicadol 30S, Silicadol 30H, Silicadol 30SH, Silicadol 40G, Silicadol 20A, and Silicadol 30B, all manufactured by Nippon Chemical Industrial Co., Ltd., and it is suitable to use Silicadol 20 and Silicadol 30 in particular; however, the colloidal silica is not intended to be limited to these.

### <Far-infrared radiation emitting ceramic and far-infrared radiation emitting mineral>

Examples of the far-infrared radiation emitting ceramic and the far-infrared radiation emitting mineral include silicon carbide, zirconia, zircon, alumina, maifan stone, tourmaline minerals, bioceramics, kiyoseki, illite, biotite, germanium, and monazite, and these may be used singly or in combination of two or more kinds. However, the far-infrared radiation emitting ceramic and the far-infrared radiation emitting mineral are not intended to be limited to these, and various materials that emit far-infrared and do not inhibit the reactions of the components of a water glass coating composition at the time of stirring and mixing can be used. Through emission of far-infrared radiation, stirring can be achieved while stably maintaining the finely broken clusters of water molecules that constitute alkaline ionized water. Furthermore, stirring can also contribute to the promotion of binding between compositions.

Furthermore, it is suitable to make the shape of the far-infrared radiation emitting ceramic and the far-infrared radiation emitting mineral into a spherical shape, but the shape may also be made into a flat shape, a polygonal shape, a rectangular shape or the like. Furthermore, the size is not particularly limited as long as the size is in the range where mechanical stirring and mixing can be smoothly carried out. For example, when the shape is made into a spherical shape, it is suitable to adjust the size to a diameter of 3 mm to 10 mm, but the size is not intended to be limited to this range.

In addition, there are no particular limitations on the number of pieces, but for example, in the case of performing stirring and mixing in a container having a capacity of 200 L, it is suitable to adjust the number to 500 to 1,000.

Furthermore, clusters of water molecules of alkaline ionized water can be finely broken down by bringing the far-infrared radiation emitting ceramic and the far-infrared radiation emitting mineral into contact with alkaline ionized water. Thus it is also acceptable to carry out the process such that alkaline ionized water is subjected to a treatment of finely breaking down clusters of water molecules by accommodating alkaline ionized water in a container together with at least any one of a far-infrared radiation emitting ceramic and a far-infrared radiation emitting mineral and stirring the mixture, subsequently a silicate compound is introduced into the container, and stirring and mixing are carried out. Alternatively, it is also acceptable to carry out the process such that alkaline ionized water and a silicate compound are accommodated in a container together with at least any one of a far-infrared radiation emitting ceramic and a far-infrared radiation emitting mineral, the contents are stirred and mixed, and the treatment of finely breaking down clusters of water molecules of the alkaline ionized water is carried out during the process of stirring and mixing.

### <Additives>

In the method for producing a water glass coating composition of the present invention, an adhesive, a pigment, a neutralizing agent, a binding agent, and the like are incorporated as necessary.

In regard to the adhesive, known or novel adhesives that are used in the field of coating materials are appropriately incorporated as necessary, so that the coating material can have desired viscosity and adhesiveness. Examples of the adhesive that can be used in the production method of the present invention include an aqueous silicone solution, an acrylic emulsion, a polyester neutralization product (for example, a polyester having at least a portion of carboxyl groups of the polyester neutralized by ionizing with a basic compound (an alkali metal salt, a hydroxide of an alkaline earth metal, ammonia, an organic amine or the like), is dispersed in water by a phase inversion emulsification method or the like), an aqueous emulsion of an acrylic acid ester copolymer (for example, an aqueous emulsion of a copolymer of an acrylic acid ester and styrene), but the adhesive is not intended to be limited to these.

The pigment is incorporated in the case of coloring the coating composition or the like, and any of an inorganic pigment and an organic pigment can be used. Specific examples include, but are not limited to, white pigments such as titanium white and zinc white; black pigments such as carbon black; red pigments such as permanent red; rust-colored pigments such as iron oxide red; yellow pigments such as chrome yellow; blue pigments such as cyanine blue, Prussian blue and ultramarine blue; and green pigments such as cyanine green.

Furthermore, a rust preventive pigment may be used alone, or may be used in combination with the coloring pigments described above. Examples of the rust preventive pigment include, but are not limited to, a zinc powder, red lead, lead suboxide, lead cyanamide, zinc phosphate, aluminum phosphate, zinc molybdate, calcium plumbate, zinc chromate, and mica-like iron oxide.

Furthermore, an extender pigment may be used alone, or may be used in combination with the coloring pigments or the rust preventive pigments described above. Examples of the extender pigment include, but are not limited to, calcium carbonate, clay, talc, and barium sulfate.

Furthermore, a special functional pigment may be used alone, or may be used in combination with the coloring pigments, the rust preventive pigments, or the extender pigments described above. Examples of the special functional pigment include, but are not limited to, an aluminum paste, copper suboxide, glass beads, and mica.

Here, when a pigment is incorporated, it is suitable to use a pigment dispersant in combination, depending on the pigment used. Thereby, dispersibility of the pigment can be increased.

The neutralizing agent is added as necessary, in order to give a neutralizing effect to the water glass coating composition. Examples of the neutralizing agent include alcohols such as methanol. When an alcohol such as methanol is incorporated, a neutralizing effect and an effect as a binding agent are exhibited. However, the neutralizing agent is not intended to be limited to this.

Furthermore, when the coating composition of the present invention is produced, additives may be further added thereto in accordance with the use of the coating composition, or so as to allow the coating composition to maintain a uniform state without causing separation or the like. For example, a silicone emulsion may also be used in order to promote flexibility of the coating film and to thereby prevent the occurrence of cracks and the like.

Hereinafter, Production Examples of the water glass coating composition in accordance with the use will be described.

### (1) Production Example 1

In Production Example 1, a production example for a transparent coating composition which is applied for use on a material to be coated such as bricks or tiles will be described. In this case, adhesiveness is required as a property of the coating material.

### (Materials to be incorporated)

The materials to be incorporated include alkaline ionized water containing clusters of water molecules that have been finely broken down, an alkali silicate, methanol, and an aqueous silicone solution. Lithium silicate and potassium silicate are used together as the alkali silicate.

### (Mixing proportions)

The mixing proportions are not particularly limited as long as the coating composition does not cause inconvenience (for example, separation or aggregation or the like) as a coating material, but it is suitable to produce 16 kg in total of a water glass coating composition at the following mixing proportions.

The mixing proportion of lithium silicate may be 1.5 parts to 2.3 parts by weight, but the mixing proportion is suitably 1.7 parts to 2.1 parts by weight, more suitably 1.8 parts to 2.0 parts by weight, and even more suitably 1.9 parts by weight.

The mixing proportion of the alkaline ionized water containing clusters of water molecules that have been finely broken down may be 7.6 parts to 11.4 parts by weight, but the mixing proportion is suitably 8.5 parts to 10.5 parts by weight, more suitably 9.0 parts to 10 parts by weight, and even more suitably 9.5 parts by weight.

The mixing proportion of methanol may be 0.12 parts to 0.20 parts by weight, but the mixing proportion is suitably 0.14 parts to 0.18 parts by weight, more suitably 0.15 parts to 0.17 parts by weight, and even more suitably 0.16 parts by weight.

The mixing proportion of potassium silicate may be 0.16 parts to 0.60 parts by weight, but the mixing proportion is suitably 0.28 parts to 0.42 parts by weight, more suitably 0.31 parts to 0.39 parts by weight, even more suitably 0.33 parts to 0.37 parts by weight, and most suitably 0.35 parts by weight.

Here, it is suitable to incorporate potassium silicate as an aqueous solution. The potassium silicate concentration of the aqueous potassium silicate solution may be 20 wt% to 50 wt%, but the concentration is suitably 25 wt% to 45 wt%, more suitably 30 wt% to 40 wt%, and even more suitably 35 wt%. The mixing proportion of the aqueous solution of potassium silicate may be 0.8 parts to 1.2 parts by weight, but the mixing proportion is suitably 0.9 parts to 1.1 parts by weight, more suitably 0. 95 parts to 1.05 parts by weight, and even more suitably 1 part by weight.

The mixing proportion of the aqueous silicone solution may be 2.7 parts to 4.2 parts by weight, but the mixing proportion is suitably 3.0 parts to 3.8 parts by weight, more suitably 3.2 parts to 3.6 parts by weight, and even more suitably 3.4 parts by weight.

The concentration of the aqueous silicone solution may be 20 wt% to 50 wt%, but the concentration is suitably 25 wt% to 45 wt%, more suitably 30 wt% to 40 wt%, and even more suitably 35 wt%.

### (Order of mixing)

The order of mixing of the starting raw materials described above that constitute the coating composition is not particularly limited, and these materials may be stirred and mixed simultaneously or in an arbitrary order for an arbitrary stirring time, or a portion of the starting raw materials may be stirred and mixed simultaneously, while the remaining starting raw materials may be stirred and mixed sequentially for an arbitrary stirring time. However, it is particularly preferable to employ the order of mixing and the stirring time as described below. In this case, a coating material which maximally induces long-term retentivity of carbon dioxide absorption capacity can be easily obtained. Meanwhile, the production method of the present invention is advantageous in that, unlike general methods for producing a water glass coating composition, heating is not needed, and the method can be carried out at room temperature. Thereby, the loss of cost due to the energy required for heating, and the fluctuation in the mixing composition that can occur due to heating can be suppressed, and a coating composition can be satisfactorily produced.

Alkaline ionized water containing clusters of water molecules that have been finely broken down and lithium silicate are introduced into a container, and the mixture is stirred and mixed, together with a far-infrared radiation emitting ceramic and/or a far-infrared radiation emitting mineral, for 0.5 hours or longer, suitably 0.5 to 3 hours, more suitably 1 to 2 hours, and even more suitably 2 to 3 hours.

Next, methanol is introduced into the container, and the mixture is stirred and mixed for 2 hours or longer, suitably 2 to 6 hours, more suitably 3 to 6 hours, and even more suitably 5 to 6 hours.

Next, an aqueous solution of potassium silicate is introduced into the container, and the mixture is stirred and mixed for one hour or longer, suitably 1 to 6 hours, more suitably 2 to 6 hours, even more suitably 3 to 6 hours, and still more suitably 5 to 6 hours.

Finally, an aqueous silicone solution is introduced into the container, and the mixture is stirred and mixed for one hour or longer, suitably 1 to 6 hours, more suitably 3 to 6 hours, and even more suitably 5 to 6 hours.

Then, the far-infrared radiation emitting ceramic and/or far-infrared radiation emitting mineral is separated, and thereby a coating composition is obtained.

### (2) Production Example 2

In Production Example 2, a production example for a transparent coating composition which is applied for use on a material to be coated such as concrete or plaster boards will be described. In this case, adhesiveness and impregnating ability are required as properties of the coating material.

### (Materials to be incorporated)

The materials to be incorporated include alkaline ionized water containing clusters of water molecules that have been finely broken down, lithium silicate, a polyester neutralization product (for example, a polyester having at least a portion of carboxyl groups of the polyester neutralized by ionizing with a basic compound (an alkali metal salt, a hydroxide of an alkaline earth metal, ammonia, an organic amine or the like), is dispersed in water by a phase inversion emulsification method or the like), an aqueous emulsion of an acrylic acid ester copolymer (an aqueous emulsion of a copolymer of an acrylic acid ester and styrene), colloidal silica, and a silicone emulsion.

### (Mixing proportions)

The mixing proportions are not particularly limited as long as the coating composition does not cause inconvenience (for example, separation or aggregation or the like) as a coating material, but it is suitable to produce 16 kg in total of a water glass coating composition at the following mixing proportions.

The mixing proportion of colloidal silica may be 2.4 parts to 3.6 parts by weight, but the mixing proportion is suitably 2.7 parts to 3.3 parts by weight, more suitably 2.8 parts to 3.2 parts by weight, and more suitably 3.0 parts by weight.

The mixing proportion of the alkaline ionized water containing clusters of water molecules that have been finely broken down may be 1.3 parts to 2.1 parts, but the mixing proportion is suitably 1.5 parts to 1.9 parts by weight, more suitably 1.6 parts to 1.8 parts by weight, and even more suitably 1.7 parts by weight.

The mixing proportion of lithium silicate may be 0.17 parts to 0.27 parts by weight, but the mixing proportion is suitably 0.19 parts to 0.25 parts by weight, more suitably 0.2 to 0.24 parts by weight, and even more suitably 0.22 parts by weight.

The mixing proportion of the polyester neutralization product may be 4.8 parts to 7.2 parts, but the mixing proportion is suitably 5.4 parts to 6.6 parts by weight, more suitably 5.7 parts to 6.3 parts by weight, and even more suitably 6.0 parts by weight.

The mixing proportion of the aqueous emulsion of an acrylic acid ester copolymer may be 3.7 parts to 5.7 parts by weight, but the mixing proportion is suitably 4.2 parts to 5.2 parts by weight, more suitably 4.4 parts to 5.0 parts by weight, and even more suitably 4.7 parts by weight.

The mixing proportion of the silicone emulsion may be 0.30 parts to 0.46 parts by weight, but the mixing proportion is suitably 0.34 parts to 0.42 parts by weight, more suitably 0.36 parts to 0.40 parts by weight, and even more suitably 0.38 parts by weight.

### (Order of mixing)

The order of mixing of the starting raw materials described above that constitute the coating composition is not particularly limited, and these materials may be stirred and mixed simultaneously or in an arbitrary order for an arbitrary stirring time, or a portion of the starting raw materials may be stirred and mixed simultaneously, while the remaining starting raw materials may be stirred and mixed sequentially for an arbitrary stirring time. However, it is particularly preferable to employ the order of mixing and the stirring time as described below. In this case, a coating material which maximally induces long-term retentivity of carbon dioxide absorption capacity can be easily obtained.

Alkaline ionized water containing clusters of water molecules that have been finely broken down is introduced into a container, and the alkaline ionized water is stirred and mixed, together with a far-infrared radiation emitting ceramic and/or a far-infrared radiation emitting mineral, for one hour or longer, suitably 1 to 5 hours, more suitably 2 to 5 hours, and even more suitably 3 to 5 hours.

Next, lithium silicate is introduced into the container, and the mixture is stirred and mixed for one hour or longer, suitably 1 to 6 hours, more suitably 2 to 6 hours, even more suitably 3 to 6 hours, and still more suitably 5 to 6 hours.

Next, a polyester neutralization product is introduced into the container, and the mixture is stirred and mixed for one hour or longer, suitably 1 to 6 hours, more suitably 2 to 6 hours, even more suitably 3 to 6 hours, and still more suitably 5 to 6 hours.

Next, an aqueous emulsion of an acrylic acid ester copolymer is introduced into the container, and the mixture is stirred and mixed for one hour or longer, suitably 1 to 6 hours, more suitably 3 to 6 hours, and even more suitably 5 to 6 hours.

Finally, a silicone emulsion is introduced into the container, and the mixture is stirred and mixed for one hour or longer, suitably 1 to 6 hours, more suitably 2 to 6 hours, even more suitably 3 to 6 hours, and still more suitably 5 to 6 hours.

Furthermore, the far-infrared radiation emitting ceramic and/or the far-infrared radiation emitting mineral is separated, and thereby, a coating composition is obtained.

### (3) Production Example 3

In Production Example 3, a production example for a colored coating composition which is applied for use on a material to be coated such as concrete or plaster boards will be described. In this case, adhesiveness and impregnating ability are required as properties of the coating material.

### (Materials to be incorporated)

The materials to be incorporated include alkaline ionized water containing clusters of water molecules that have been finely broken down, lithium silicate, a pigment, a pigment dispersant, calcium carbonate, potassium silicate, a polyester neutralization product (for example, a polyester having at least a portion of carboxyl groups of the polyester neutralized by ionizing with a basic compound (an alkali metal salt, a hydroxide of an alkaline earth metal, ammonia, an organic amine or the like), is dispersed in water by a phase inversion emulsification method or the like), and an acrylic emulsion.

### (Mixing proportions)

The mixing proportions are not particularly limited as long as the coating composition does not cause inconvenience (for example, separation or aggregation or the like) as a coating material, but it is suitable to produce 16 kg in total of a water glass coating composition at the following mixing proportions.

The mixing proportion of lithium silicate may be 1.9 parts to 2.9 parts by weight, but the mixing proportion is suitably 2.1 parts to 2.7 parts by weight, more suitably 2.2 parts to 2.6 parts by weight, and even more suitably 2.4 parts by weight.

The mixing proportion of the alkaline ionized water containing clusters of water molecules that have been finely broken down may be 1.1 parts to 1.7 parts by weight, but the mixing proportion is suitably 1.2 parts to 1.6 parts by weight, more suitably 1.3 parts to 1.5 parts by weight, and even more suitably 1.4 parts by weight.

The mixing proportion of the pigment may be 1.4 parts to 2.2 parts by weight, but the mixing proportion is suitably 1.6 parts to 2.0 parts by weight, more suitably 1.7 parts to 1.9 parts by weight, and even more suitably 1.8 parts by weight.

The mixing proportion of the pigment dispersant may be 0.04 parts to 0.06 parts by weight, but the mixing proportion is suitably 0.045 parts to 0.055 parts by weight, and more suitably 0.05 parts by weight.

The mixing proportion of calcium carbonate may be 0.7 parts to 1.1 parts by weight, but the mixing proportion is suitably 0.8 parts to 1.0 parts by weight, more suitably 0.85 parts to 0. 95 parts by weight, and even more suitably 0.9 parts by weight.

The mixing proportion of potassium silicate may be 0.08 parts to 0.30 parts by weight, but the mixing proportion is suitably 0.14 parts to 0.21 parts by weight, more suitably 0.15 parts to 0.2 parts by weight, more suitably 0.16 parts to 0.19 parts by weight, and most suitably 0.175 parts by weight.

Here, it is suitable to incorporate potassium silicate as an aqueous solution. The potassium silicate concentration of the aqueous solution of potassium silicate may be set to 20 wt% to 50 wt%, but the concentration is suitably 25 wt% to 45 wt%, more suitably 30 wt% to 40 wt%, and even more suitably 35 wt%. The mixing proportion of the aqueous solution of potassium silicate may be 0.4 parts to 0. 6 parts by weight, but the mixing proportion is suitably 0.45 parts to 0.55 parts by weight, more suitably 0.48 parts to 0.53 parts by weight, and even more suitably 0.5 parts by weight.

The mixing proportion of the polyester neutralization product may be 4.1 parts to 6.3 parts by weight, but the mixing proportion is suitably 4.6 parts to 5.8 parts by weight, more suitably 4.9 parts to 5.5 parts by weight, and even more suitably 5.2 parts by weight.

The mixing proportion of the acrylic emulsion may be 3.0 parts to 4.6 parts by weight, but the mixing proportion is suitably 3.4 parts to 4.2 parts by weight, more suitably 3.6 parts to 4.0 parts by weight, and even more suitably 3.8 parts by weight.

### (Order of mixing)

The order of mixing of the starting raw materials described above that constitute the coating composition is not particularly limited, and these materials may be stirred and mixed simultaneously or in an arbitrary order for an arbitrary stirring time, or a portion of the starting raw materials may be stirred and mixed simultaneously, while the remaining starting raw materials may be stirred and mixed sequentially for an arbitrary stirring time. However, it is particularly preferable to employ the order of mixing and the stirring time as described below. In this case, a coating material which maximally induces long-term retentivity of carbon dioxide absorption capacity can be easily obtained.

Lithium silicate and alkaline ionized water containing clusters of water molecules that have been finely broken down are introduced into a container, and the mixture is stirred and mixed, together with a far-infrared radiation emitting ceramic and/or a far-infrared radiation emitting mineral, for one hour or longer, suitably 1 to 6 hours, more suitably 2 to 6 hours, and even more suitably 5 to 6 hours.

Next, a pigment and a pigment dispersant are introduced into the container, and the mixture is stirred and mixed for 2 hours or longer, suitably 2 to 6 hours, more suitably 3 to 6 hours, and even more suitably 5 to 6 hours.

Next, calcium carbonate is introduced into the container, and the mixture is stirred and mixed for one hour or longer, suitably 1 to 5 hours, more suitably 2 to 5 hours, and even more suitably 3 to 5 hours.

Next, an aqueous solution of potassium silicate is introduced into the container, and the mixture is stirred and mixed for one hour or longer, suitably 1 to 5 hours, more suitably 2 to 5 hours, and even more suitably 3 to 5 hours.

Next, a polyester neutralization product is introduced into the container, and the mixture is stirred and mixed for one hour or longer, suitably 1 to 5 hours, more suitably 2 to 5 hours, and even more suitably 3 to 5 hours.

Finally, an acrylic emulsion is introduced into the container, and the mixture is stirred and mixed for one hour or longer, suitably 1 to 5 hours, more suitably 2 to 5 hours, and even more suitably 3 to 5 hours.

Subsequently, the far-infrared radiation emitting ceramic and/or the far-infrared radiation mineral is separated, and thereby a coating composition is obtained.

When a coating composition obtainable by the production method of the present invention is applied on an object to be coated, the coating composition penetrates into voids such as capillary pores of the object to be coated, the coating composition is polymerized under the action of carbon dioxide and cured, and a barrier of vitreous polysilicic acid is formed as a coating film. Furthermore, this coating film continuously maintains absorption capacity of carbon dioxide in the atmosphere over a long time. Generally, a coating film having carbon dioxide absorption capacity is such that when carbon dioxide absorption capacity is lost, the coating film is oxidized, deterioration begins to occur, and weather resistance may disappear. On the contrary, a coating film formed from the coating composition obtainable by the production method of the present invention continuously maintains carbon dioxide absorption capacity over a long time period. As a result, deterioration of the coating film does not easily occur over a long time, and weather resistance does not easily disappear over a long time. That is, the coating composition can be said to be an excellent coating composition which can promote maintenance of carbon dioxide absorption capacity for a long time and retention of weather resistance for a long time. Particularly, the ability to maintain carbon dioxide absorption capacity for a long time leads to a reduction of the amount of carbon dioxide emission, which is a cause of global warming. Therefore, for example, when a coating composition obtainable by the production method of the present invention is applied on an object to be coated, and a coating film is formed, so to speak, an effect similar to afforestation can be obtained.

To specifically explain the maintenance of carbon dioxide absorption capacity, the water glass coating composition obtainable by the production method of the present invention continuously maintained carbon dioxide absorption capacity for at least 2,520 hours in an environment at a carbon dioxide concentration of 4,000 ppm (more particularly, initial carbon dioxide concentration: 4,000 ppm; carbon dioxide is additionally introduced after a lapse of 840 hours and the concentration is adjusted to 4,000 ppm; carbon dioxide is additionally introduced after a further lapse of 1,680 hours and the concentration is adjusted to 3, 600 ppm). Conventional water glass coating compositions can maintain carbon dioxide absorption capacity only for about 50 to 200 hours, even in an environment at a carbon dioxide concentration of 2,000 ppm. When this is calculated based on the average carbon dioxide concentration in Japan (338 ppm), conventional water glass coating compositions can maintain carbon dioxide absorption capacity only for about 5 to 10 years after the coating composition is applied on an object to be coated, while the water glass coating composition obtainable by the production method of the present invention can maintain carbon dioxide absorption capacity for at least about 30 years after the coating composition is applied on an object to be coated. As such, in the water glass coating composition obtainable by the production method of the present invention, carbon dioxide absorption capacity is maintained for a very long time period as compared with conventional water glass coating compositions. Therefore, weather resistance is retained for a long time period without deterioration of the coating film.

Furthermore, when a coating film is formed by applying a coating composition obtainable by the production method of the present invention on an object to be coated, the front surface (surface that is in contact with the atmosphere) of the coating film exhibits water repellency. On the other hand, the back surface (surface that is in contact with the object to be coated) of the coating film is hydrophilic. Therefore, at the front surface of the coating film, penetration of rain water or the like into the object to be coated is blocked, and weather resistance can be maintained for a long time period. In addition, when rain water or the like runs down on the front surface of the coating film, contaminants also run down at the same time, and the good appearance of the surface of the coating film is retained for a long time period. Furthermore, even if water is contained inside the object to be coated, or water has penetrated therein, this water can be attracted to the back surface of the coating film due to the hydrophilicity of the back surface of the coating film, and the water is released from the front surface of the coating film. This action of a coating film obtainable by applying a coating composition obtainable by the production method of the present invention on an object to be coated, can also contribute to long-term retention of weather resistance. Furthermore, when a coating film is formed by applying a coating composition obtainable by the production method of the present invention on an object to be coated, water repellency is maintained even in a low temperature environment at -75°C. Therefore, water or snow can be prevented from adhering to the wall surfaces and the like in the upper parts of high-rise buildings such as pylons, which are prone to be exposed to a low temperature environment. Thereby, any material damage or human injury caused when ice or snow accumulates on the wall surfaces and the like in the upper parts of high-rise buildings, and lumps of ice or snow falls down on the ground, can be avoided.

Furthermore, when a coating film is formed by applying a coating composition obtainable by the production method of the present invention on an object to be coated, fire resistance and heat resistance can be imparted to the object to be coated. According to the experiments carried out by the inventors of the present invention, when a coating composition obtainable by the production method of the present invention was applied on a wood to form a coating film, and the coating film was cured for one week, the wood did not burn even if the wood was exposed to the flames of a gas burner at 1400°C for 5 minutes. Furthermore, immediately after the wood building material was exposed to the flames of a gas burner for 5 minutes, slight deformation of the coating film was observed, but the deformation gradually returned to the original state. In addition, at a temperature of about 200°C to 300°C, fire resistance or heat resistance was maintained for at least 20 minutes. Therefore, a coating composition obtainable by the production method of the present invention also has an effect of imparting fire resistance or heat resistance to an object to be coated.

In addition to that, the coating composition also has an effect of blocking and suppressing volatilization of hazardous substances that are contained in the object to be coated, for example, formaldehyde that may cause sick house syndrome.

The embodiments described above are only examples of suitable embodiments of the present invention, but the embodiments are not intended to be limited to these, and various modifications can be carried out to the extent that the gist of the present invention is maintained. For example, when the coating composition of the present invention is produced, substances other than those described above (also including unintended impurities as well as substances that are intentionally added) may also be further added to the extent that the effect of the present invention is not significantly inhibited.

For example, one or more of volcanic ash such as shirasu, natural or synthetic crystal powder, and natural or synthetic quartz powder may be added in an amount of 0.05 wt% to 0.3 wt% so as to increase adhesiveness as a coating material.

Furthermore, a natural surfactant, cineole, a metal compound, an inorganic fixing agent, a curing accelerating agent, a penetration aid and the like may also be incorporated.

Furthermore, the object to be coated is not intended to be limited to bricks, tiles, concrete, and plaster boards. For example, metals such as iron, stones, wood, fibers and the like may also be used. When a coating composition obtainable by the production method of the present invention is applied on a wood, flame resistance or water repellency can be imparted to the wood. In addition, when a coating composition obtainable by the production method of the present invention is applied on a fiber, flame resistance or water repellency can be imparted to the fiber. Furthermore, the coating composition obtainable by the production method of the present invention can maintain flexibility without impairing it, even if applied on a fiber or the like. In addition, when a coating composition obtainable by the production method of the present invention is applied on a metal such as iron, the contact between moisture and the metal is prevented, and the generation of rust can be prevented. Further, deformation of the metal due to heat can also be prevented.

Furthermore, a coating composition may also be produced according to the Production Example described below. In this case, a coating composition which can maintain carbon dioxide absorption capacity for a long time period and has very high fire resistance and heat resistance, can be produced.

### (4) Production Example 4

In Production Example 4, a production example for a transparent coating composition having high fire resistance will be described. Furthermore, the coating compositions described above that are obtainable by Production Examples 1 to 3 also have high fire resistance, but the coating composition obtainable by Production Example 4 can have dramatically higher fire resistance and heat resistance as compared with those compositions of Production Examples 1 to 3.

### (Materials to be incorporated)

Materials to be incorporated include alkaline ionized water containing clusters of water molecules that have been finely broken down, lithium silicate, crystal powder, shirasu, calcium carbonate, potassium silicate, a polyester neutralization product (for example, a polyester having at least a portion of carboxyl groups of the polyester neutralized by ionizing with a basic compound (an alkali metal salt, a hydroxide of an alkaline earth metal, ammonia, an organic amine or the like), is dispersed in water by a phase inversion emulsification method or the like), and an acrylic emulsion. Here, the crystal powder may be a synthetic product or a naturally occurring product. In addition, quartz powder may also be used instead of the crystal powder. The quartz powder may be a synthetic product or a naturally occurring product. Furthermore, other volcanic ash may also be used instead of shirasu. The blend in the Production Example 4 is basically a result of changing the pigment and pigment dispersant in Production Example 3 to crystal powder and shirasu. The coating material obtainable by the Production Example 4 has further superior fire resistance and heat resistance as compared with the coating materials obtainable by Production Examples 1 to 3. Furthermore, the coating material is considered to have carbon dioxide absorption capacity that is equivalent to that of the coating materials obtainable by Production Example 1.

### (Mixing proportion)

The mixing proportions are not particularly limited as long as the coating composition does not cause inconvenience (for example, separation or aggregation or the like) as a coating material, but it is suitable to produce 16 kg in total of a water glass coating composition at the following mixing proportions.

The mixing proportion of lithium silicate may be 1.9 parts to 2.9 parts by weight, but the mixing proportion is suitably 2.1 parts to 2.7 parts by weight, more suitably 2.2 parts to 2.6 parts by weight, and even more suitably 2.4 parts by weight.

The mixing proportion of the alkaline ionized water containing clusters of water molecules that have been finely broken down may be 1.1 parts to 1.7 parts by weight, but the mixing proportion is suitably 1.2 parts to 1.6 parts by weight, more suitably 1.3 parts to 1.5 parts by weight, and even more suitably 1.4 parts by weight.

The mixing proportion of crystal powder and shirasu may be 1.4 parts to 2.3 parts by weight, but the mixing proportion is suitably 1.6 parts to 2.1 parts by weight, more suitably 1.7 parts to 2.0 parts by weight, and even more suitably 1.85 parts by weight.

The mixing ratio (by weight) of crystal powder and shirasu may e set to 5 to 9 : 5 to 1, but the ratio is suitably 6 to 8 : 4 to 2, and more suitably 7 : 3.

The mixing proportion of calcium carbonate may be 0.7 parts to 1.1 parts by weight, but the mixing proportion is suitably 0.8 parts to 1.0 parts by weight, more suitably 0.85 parts to 0.95 parts by weight, and even more suitably 0.9 parts by weight.

The mixing proportion of potassium silicate may be 0.08 parts to 0.30 parts by weight, but the mixing proportion is suitably 0.14 parts to 0.21 parts by weight, more suitably 0.15 parts to 0.2 parts by weight, more suitably 0.16 parts to 0.19 parts by weight, and most suitably 0.175 parts by weight.

Here, it is suitable to incorporate potassium silicate as an aqueous solution. The potassium silicate concentration of the aqueous solution of potassium silicate may be set to 20 wt% to 50 wt%, but the concentration is suitably 25 wt% to 45 wt%, more suitably 30 wt% to 40 wt%, and even more suitably 35 wt%. The mixing proportion of the aqueous solution of potassium silicate may be 0.4 parts to 0.6 parts by weight, but the mixing proportion is suitably 0.45 parts to 0.55 parts by weight, more suitably 0.48 parts to 0.53 parts by weight, and even more suitably 0.5 parts by weight.

The mixing proportion of the polyester neutralization product may be 4.1 parts to 6.3 parts by weight, but the mixing proportion is suitably 4.6 parts to 5.8 parts by weight, more suitably 4.9 parts to 5.5 parts by weight, and even more suitably 5.2 parts by weight.

The mixing proportion of the acrylic emulsion may be 3.0 parts to 4.6 parts by weight, but the mixing proportion is suitably 3.4 parts to 4.2 parts by weight, more suitably 3.6 parts to 4.0 parts by weight, and even more suitably 3.8 parts by weight.

### (Order of mixing)

The order of mixing of the starting raw materials described above that constitute the coating composition is not particularly limited, and these materials may be stirred and mixed simultaneously or in an arbitrary order for an arbitrary stirring time, or a portion of the starting raw materials may be stirred and mixed simultaneously, while the remaining starting raw materials may be stirred and mixed sequentially for an arbitrary stirring time. However, it is particularly preferable to employ the order of mixing and the stirring time as described below. In this case, a coating material which maximally induces long-term retentivity of carbon dioxide absorption capacity can be easily obtained.

Lithium silicate and alkaline ionized water containing clusters of water molecules that have been finely broken down are introduced into a container, and the mixture is stirred and mixed, together with a far-infrared radiation emitting ceramic and/or a far-infrared radiation emitting mineral, for one hour or longer, suitably 1 to 6 hours, more suitably 2 to 6 hours, and even more suitably 5 to 6 hours.

Next, shirasu and crystal powder are introduced into the container, and the mixture is stirred and mixed for 2 hours or longer, suitably 2 to 6 hours, more suitably 3 to 6 hours, and even more suitably 5 to 6 hours.

Next, calcium carbonate is introduced into the container, and the mixture is stirred and mixed for one hour or longer, suitably 1 to 5 hours, more suitably 2 to 5 hours, and even more suitably 3 to 5 hours.

Next, an aqueous solution of potassium silicate is introduced into the container, and the mixture is stirred and mixed for one hour or longer, suitably 1 to 5 hours, more suitably 2 to 5 hours, and even more suitably 3 to 5 hours.

Next, a polyester neutralization product is introduced into the container, and the mixture is stirred and mixed for one hour or longer, suitably 1 to 5 hours, more suitably 2 to 5 hours, and even more suitably 3 to 5 hours.

Finally, an acrylic emulsion is introduced into the container, and the mixture is stirred and mixed for one hour or longer, suitably 1 to 5 hours, more suitably 2 to 5 hours, and even more suitably 3 to 5 hours.

Subsequently, the far-infrared radiation emitting ceramic and/or the far-infrared radiation mineral is separated, and thereby a coating composition is obtained.

### Examples

Hereinafter, Examples of the present invention will be described, but the present invention is not intended to be limited to these Examples.

### (Example 1)

Example Product 1 was produced by the following procedure.

First, alkaline ionized water was produced from tap water by using an alkaline ionized water filter (JAW-010, Nippon Intek Holdings Co., Ltd.) (set conditions: pH 7.3 to 8.7). Subsequently, a treatment to finely break down clusters of water molecules was carried out by using an apparatus for finely breaking down clusters of water molecules (Cosmo Balance M122, Water System Co., Ltd.). Through the above-described processes, alkaline ionized water containing clusters of water molecules that have been finely broken down was obtained. The same alkaline ionized water was used also for the subsequent Examples.

Next, 9.50 kg of alkaline ionized water and 1.90 kg of lithium silicate (Lithium Silicate 45, Nippon Chemical Industrial Co., Ltd.) were introduced into a container having a capacity of 200 L. Furthermore, 600 far-infrared radiation emitting ceramic balls (Mizukami porcelain, Gifu-ken, diameter: 3 to 10 mm) were introduced into the container, and the contents were stirred for 2 hours. These ceramic balls were produced from the earth mined at Mizukami, Kojimachi, Mizunami-shi, Gifu-ken. The same number of the same ceramic balls was used also for the subsequent Examples.

Next, 0.16 kg of methanol was introduced into the container, and the mixture was stirred for 2 hours. Subsequently, 1.00 kg of an aqueous solution of potassium silicate was introduced thereto, and the mixture was stirred for 2 hours. Furthermore, 3.44 kg of an aqueous silicone solution (manufactured by Fuji Chemical Industry Co., Ltd.) was introduced into the container, and the mixture was stirred for 2 hours. The aqueous solution of potassium silicate was prepared by dissolving potassium silicate (Potassium Silicate 2K, Nippon Chemical Industrial Co., Ltd.) in distilled water to a concentration of 35 wt%.

Stirring was carried out at room temperature. The same was applied in the subsequent Examples.

Furthermore, simultaneously with an aqueous silicone solution, quartz powder (manufactured by Nippon Kasei Chemical Co., Ltd., synthetic quartz powder MKC (registered trademark) silica) and shirasu (a white sandy sediment which is widely distributed in Minamikyushu and is mainly composed of volcanic substances) were added thereto in a trace amount (0.05 wt% to 0.3 wt%).

After the processes described above, the far-infrared radiation emitting ceramic balls were removed, and thus an Example Product 1 was obtained. The mixing proportions of the respective raw materials were as follows.
Lithium silicate: 1.90 kg (11.875 wt%)
Alkaline ionized water: 9.50 kg (59.375 wt%)
Methanol: 0.16 kg (1.000 wt%)
Aqueous solution of potassium silicate: 1.00 kg (6.250 wt%)
Aqueous silicone solution: 3.44 kg (21.500 wt%)
Total: 16.0 kg

### (Example 2)

An Example Product 2 was produced by the following procedure.

1.70 kg of alkaline ionized water and 3.00 kg of colloidal silica (Silicadol (registered trademark), Nippon Chemical Industrial Co., Ltd.) were introduced into a container having a capacity of 200 L. Furthermore, far-infrared radiation emitting ceramic balls were introduced into the container, and the contents were stirred for 2 hours.

Next, 0.22 kg of lithium silicate (Lithium Silicate 45, Nippon Chemical Industrial Co., Ltd.) was introduced into the container, and the contents were stirred for 2 hours. Subsequently, 6.00 kg of a polyester neutralization product (New Track 2011, manufactured by Kao Corp.) was introduced thereto, and the mixture was stirred for 2 hours. Furthermore, 4.70 kg of an aqueous emulsion of an acrylic acid ester copolymer (manufactured by Fuji Chemical Industry Co., Ltd.) was introduced into the container, and the mixture was stirred for 2 hours. Subsequently, 0.38 kg of a silicone emulsion (manufactured by Nissin Chemical Industry Co., Ltd.) was introduced thereto, and the mixture was stirred for 2 hours.

Furthermore, simultaneously with the silicone emulsion, quartz powder (manufactured by Nippon Kasei Chemical Co., Ltd., synthetic quartz powder MKC (registered trademark) silica) and shirasu (a white sandy sediment which is widely distributed in Minamikyushu and is mainly composed of volcanic substances) were added thereto in a trace amount (0.05 wt% to 0.3 wt%).

After the processes described above, the far-infrared radiation emitting ceramic balls were removed, and thus an Example Product 2 was obtained. The mixing proportions of the respective raw materials were as follows.
Colloidal silica: 3.00 kg (18.750 wt%)
Alkaline ionized water: 1.70 kg (10.625 wt%)
Lithium silicate: 0.22 kg (1.375 wt%)
Polyester neutralization product: 6.00 kg (37.500 wt%)
Acrylic acid ester copolymer: 4.70 kg (29.375 wt%)
Silicone emulsion: 0.38 kg (2.375 wt%)
Total: 16.0 kg

### (Example 3)

An Example Product 3 was produced by the following procedure.

1.40 kg of alkaline ionized water and 2.40 kg of lithium silicate (Lithium Silicate 45, Nippon Chemical Industrial Co., Ltd.) were introduced into a container having a capacity of 200 L. Furthermore, far-infrared radiation emitting ceramic balls were introduced into the container, and the contents were stirred for 2 hours.

Subsequently, 1.80 kg of a pigment (manufactured by Nippon Chemical Industrial Co., Ltd.) and 0.05 kg of a pigment dispersant (manufactured by Nippon Chemical Industrial Co., Ltd.) were introduced into the container, and the mixture was stirred for 2 hours. Subsequently, 0.90 kg of calcium carbonate was introduced thereto, and the mixture was stirred for 2 hours. Furthermore, 0.50 kg of the same aqueous solution of potassium silicate as that used in Example 1 was introduced into the container, and the mixture was stirred for 2 hours. Subsequently, 5.20 kg of a polyester neutralization product (New Track 2011, manufactured by Kao Corp.) was introduced thereto, and the mixture was stirred for 2 hours. Furthermore, 3.80 kg of an acrylic emulsion (manufactured by Fuji Chemical Industry Co., Ltd.) was introduced into the container, and the mixture was stirred for 2 hours.

After the processes described above, the far-infrared radiation emitting ceramic balls were removed, and thus an Example Product 3 was obtained. The mixing proportions of the respective raw materials were as follows.
Lithium silicate: 2.40 kg (14.95 wt%)
Alkaline ionized water: 1.40 kg (8.72 wt%)
Pigment: 1.80 kg (11.21 wt%)
Pigment dispersant: 0.05 kg (0.31 wt%)
Calcium carbonate: 0.90 kg (5.61 wt%)
Aqueous solution of potassium silicate: 0.50 kg (3.12 wt%)
Polyester neutralization product: 5.20 kg (32.40 wt%)
Acrylic emulsion: 3.80 kg (23.68 wt%)
Total: 16.05 kg

### (Evaluation Example 1)

The coating materials of Example Products 1 to 3 obtained in Examples 1 to 3 were subjected to an evaluation of carbon dioxide absorption characteristics.

A sample was produced by applying Example Product 1 on a cement block having a surface area of 67.9 cm², and this sample was placed in a chamber having a capacity of 20 L. The chamber was filled with nitrogen and sealed. Subsequently, 0.08 L of carbon dioxide (1 atm, 25°C) was introduced into the chamber to adjust the carbon dioxide concentration to 4,000 ppm, and the carbon dioxide concentration in the chamber was measured at a constant interval of time. The same test was also carried out using Example Product 2 and Example Product 3. Further, carbon dioxide was additionally introduced after a lapse of 840 hours from the initiation of the test, to adjust the concentration to 4,000 ppm. Furthermore, carbon dioxide was additionally introduced after a lapse of 1680 hours from the initiation of the test, to adjust the concentration to 3,600 ppm.

The results are presented in Table 1 and FIG. 1. In the diagram, □ corresponds to Example Product 1; ● corresponds to Example Product 2; and Δ corresponds to Example Product 3. For all of the Example Products 1 to 3, it was confirmed that the samples continuously absorbed carbon dioxide for 1,680 hours at a carbon dioxide concentration of 4, 000 ppm, and thereafter, carbon dioxide absorption was continued even after the carbon dioxide concentration was adjusted to 3,600 ppm, so that even after a lapse of 2,520 hours, carbon dioxide absorption still occurred.

**[Table 1]**

| Measurement schedule | Time | CO₂ concentration (ppm) | | |
|---|---|---|---|---|
| | | Example Product 2 | Example Product 3 | Example Product 1 |
| H22.09.10 - 15:00 | 0 h | 4000 | 4000 | 4000 |
| H22.09.10 - 6:00 | 1 h | 3700 | 3040 | 3200 |
| H22.09.10 - 18:30 | 3.5 h | 3500 | 2000 | 2800 |
| H22.09.13 - 15:00 | 72 h | 1700 | 1600 | 900 |
| H22.09.16 - 15:00 | 144 h | 1000 | 1200 | 800 |
| H22.09.24 - 15:00 | 336 h | 300 | 650 | 200 |
| H22.10.01 - 15:00 | 504 h | 120 | 500 | 130 |
| H22.10.08 - 15:00 | 672 h | 100 | 400 | 130 |
| H22.10.15 - 15:00 | 840 h | 50 | 300 | 100 |
| H22.10.15 - CO₂addition | 840 h | 4000 | 4000 | 4000 |
| H22.10.22 - 15:00 | 1008 h | 2000 | 2400 | 1300 |
| H22.10.29 - 15:00 | 1176 h | 700 | 1400 | 400 |
| H22.11.08 - 15:00 | 1416 h | 180 | 400 | 120 |
| H22.11.19 - 15:00 | 1680 h | 50 | 400 | 100 |
| H22.11.19 - CO₂addition | 1680 h | 3600 | 3600 | 3600 |
| H22.12.03 - 15:00 | 2016 h | 2400 | 3300 | 2600 |
| H22.12.10 - 15:00 | 2184 h | 1850 | 3200 | 2150 |
| H22.12.17 - 15:00 | 2352 h | 1600 | 3150 | 2000 |
| H22.12.24 - 15:00 | 2520 h | 1550 | 3150 | 1950 |

Generally, for a coating film formed from a coating composition having carbon dioxide absorption capacity, the carbon dioxide absorption capacity is sustained only for about 50 to 200 hours even at a carbon dioxide concentration of 2, 000 ppm. Therefore, it is obvious that the carbon dioxide absorption capacity of the coating film formed from the coating composition obtainable by the production method of the present invention is a groundbreaking discovery as compared with conventional coating compositions.

### (Example 4)

An Example Product 4 was produced by the following procedure.

1.40 kg of alkaline ionized water and 2.40 kg of lithium silicate (Lithium Silicate 45, Nippon Chemical Industrial Co., Ltd.) were introduced into a container having a capacity of 200 L. Furthermore, the same number of the same far-infrared radiation emitting ceramic balls as those used in Example 1 was introduced into the container, and the contents were stirred for 2 hours.

Subsequently, 1.295 kg of quartz powder (manufactured by Nippon Kasei Chemical Co., Ltd., synthetic quartz powder MKC (registered trademark) silica) and 0.555 kg of shirasu (a white sandy sediment which is widely distributed in Minamikyushu and is mainly composed of volcanic substances) were added to the container, and the mixture was stirred for 2 hours. Subsequently, 0.90 kg of calcium carbonate was introduced to the container, and the mixture was stirred for 2 hours. Furthermore, 0.50 kg of the same aqueous solution of potassium silicate as that used in Example 1 was introduced into the container, and the mixture was stirred for 2 hours. Subsequently, 5.20 kg of a polyester neutralization product (New Track 2011, manufactured by Kao Corp.) was introduced thereto, and the mixture was stirred for 2 hours. Furthermore, 3.80 kg of an acrylic emulsion (manufactured by Fuji Chemical Industry Co., Ltd.) was introduced into the container, and the mixture was stirred for 2 hours.

After the processes described above, the far-infrared radiation emitting ceramic balls were removed, and thus an Example Product 4 was obtained. The mixing proportions of the respective raw materials were as follows.
Lithium silicate: 2.40 kg (14.95 wt%)
Alkaline ionized water: 1.40 kg (8.72 wt%)
Quartz powder: 1.295 kg (8.07 wt%)
Shirasu: 0.555 kg (3.45 wt%)
Calcium carbonate: 0.90 kg (5.61 wt%)
Aqueous solution of potassium silicate: 0.50 kg (3.12 wt%)
Polyester neutralization product: 5.20 kg (32.40 wt%)
Acrylic emulsion: 3.80 kg (23.68 wt%)
Total: 16.05 kg

### (Evaluation Example 2)

The Example Product 4 obtained in Example 4 was subjected to a pyrogenicity test.

A pyrogenicity test was carried out based on the Noncombustible Performance Test/Evaluation Method in the Fire Preventive and Fireproof Performance Test and Evaluation Procedure Manual established by a central research laboratory of Japan Testing Center for Construction Materials. This test corresponds to the evaluation of Article 2 Paragraph 9 of the Building Standards Law of Japan. Specifically, a specimen was produced by applying the Example Product 4 on a plaster board and curing the Example Product 4 for one week, and the surface of the specimen was uniformly irradiated with 50 kW/m² of radiant heat by using a radiation electric heater. The specimen was heated for 20 minutes at an emission gas flow rate of 0.024 m³/s. The total amount of heat generation (THR, unit: MJ/m²) and the maximum heat generation rate (HRR(max), unit: kW/m²) were checked, and it was checked whether the heat generation rate would exceed 200 kW/m² continuously for 10 seconds, and whether there was any hazardous deformation or the like (any cracks or holes that are hazardous for the prevention of fire, which penetrate to the back surface after completion of the test). The results are presented in Table 2. In addition, the ignition time and the flame out time of the specimen were checked by using a spark plug. The results are presented in Table 3.

**[Table 2]**

| [No.11EL073] | | | Value | Judgment | Remarks | |
|---|---|---|---|---|---|---|
| Specimen data | | Item | | | | |
| NO. | 1 | THR | 3.6 | ○ | | |
| Size (mm) | 99*100 | HRR(max) | 70.6 | - | | |
| Thickness (mm) | 12.7 | >200kw/m2 | None | ○ | for 0 second | ∼ |
| Weight (g) | 83.9 | Hazardous deformation or the like | None | ○ | | |
| NO | 2 | THR | 3.7 | ○ | | |
| Size (mm) | 99*100 | HRR(max) | 70.4 | - | | |
| Thickness(mm) | 12.7 | >200kw/m2 | None | ○ | for 0 second | ∼ |
| Weight (g) | 82.3 | Hazardous deformation or the like | None | ○ | | |
| NO. | 3 | THR | 3.2 | ○ | | |
| Size (mm) | 99*100 | HRR(max) | 65.0 | - | | |
| Thickness(mm) | 1 | >200kw/m2 | None | ○ | for 0 second | ∼ |
| Weight (g) | 80.4 | Hazardous deformation or the like | None | ○ | | |

**[Table 3]**

| | Test No.1 | Test No.2 | Test No.3 |
|---|---|---|---|
| Test date | 18/05/2011 | 18/05/2011 | 18/05/2011 |
| Ignition time(s) | 37 | 34 | 36 |
| Flame out time(s) | 50 | 47 | 48 |

From the results presented in Table 2 and Table 3, it was clearly found that the Example Product 4 exhibited fire resistance for 20 minutes or longer in an environment at 800°C, and thus can receive approval from the Minister of Land, Infrastructure, Transport and Tourism of Japan, to be noncombustible.

## Claims

1. A method for producing a water glass coating composition, the method comprising stirring and mixing a silicate compound and alkaline ionized water containing clusters of water molecules that have been finely broken down, together with at least any one of a far-infrared radiation emitting ceramic and a far-infrared radiation emitting mineral.

2. A water glass coating composition obtainable by the production method according to claim 1, the water glass coating composition comprising lithium silicate and potassium silicate as the silicate compound and comprising 7.6 parts to 11.4 parts by weight of the alkaline ionized water, 1.5 parts to 2.3 parts by weight of lithium silicate, 0.8 parts to 1.2 parts by weight of the potassium silicate as an aqueous solution at a concentration of 20 wt% to 50 wt%, 0.12 parts to 0.20 parts by weight of methanol, and 2.7 parts to 4.2 parts by weight of an aqueous silicone solution at a concentration of 20 wt% to 50 wt%, and the water glass coating composition being capable of maintaining carbon dioxide absorption capacity for at least 2,520 hours at a carbon dioxide concentration of 4,000 ppm.

3. A water glass coating composition obtainable by the production method according to claim 1, the water glass coating composition comprising lithium silicate as the silicate compound and comprising 1.3 parts to 2.1 parts by weight of the alkaline ionized water, 2.4 parts to 3.6 parts by weight of colloidal silica, 0.17 parts to 0.27 parts by weight of the lithium silicate, 4.8 parts to 7.2 parts by weight of a polyester neutralization product, 3.7 parts to 5.7 parts by weight of an aqueous emulsion of an acrylic acid ester copolymer, and 0.30 parts to 0.46 parts by weight of a silicone emulsion, and the water glass coating composition being capable of maintaining carbon dioxide absorption capacity for at least 2,520 hours at a carbon dioxide concentration of 4,000 ppm.

4. A water glass coating composition obtainable by the production method according to claim 1, the water glass coating composition comprising lithium silicate and potassium silicate as the silicate compound and comprising 1.1 parts to 1.7 parts by weight of the alkaline ionized water, 1.9 parts to 2. 9 parts by weight of the lithium silicate, 0.4 parts to 0.6 parts by weight of potassium silicate as an aqueous solution at a concentration of 20 wt% to 50 wt%, 1.4 parts to 2.2 parts by weight of a pigment, 0.04 parts to 0.06 parts by weight of a pigment dispersant, 0.7 parts to 1.1 parts by weight of calcium carbonate, 4.1 parts to 6.3 parts by weight of a polyester neutralization product, and 3.0 parts to 4.6 parts by weight of an acrylic emulsion, and the water glass coating composition being capable of maintaining carbon dioxide absorption capacity for at least 2,520 hours at a carbon dioxide concentration of 4,000 ppm.

5. A water glass coating composition obtainable by the production method according to claim 1, the water glass coating composition comprising lithium silicate and potassium silicate as the silicate compound, and comprising 1.1 parts to 1.7 parts by weight of the alkaline ionized water, 1.9 parts to 2. 9 parts by weight of lithium silicate, 0.4 parts to 0.6 parts by weight of the potassium silicate as an aqueous solution at a concentration of 20 wt% to 50 wt%, 0.7 parts to 1.1 parts by weight of calcium carbonate, 4.1 parts to 6.3 parts by weight of a polyester neutralization product, 3.0 parts to 4.6 parts by weight of an acrylic emulsion, and 1.4 parts to 2.3 parts by weight of crystal powder and shirasu (mixing ratio (by weight) of crystal powder and shirasu is 5 to 9 : 5 to 1), and the water glass coating composition being capable of maintaining carbon dioxide absorption capacity for at least 2,520 hours at a carbon dioxide concentration of 4,000 ppm.
